# EUROPEAN PATENT SPECIFICATION

(11) **EP 2 247 087 B1**
(45) Date of publication and mention of the grant of the patent: **24.08.2011**
(21) Application number: 09158976.2
(22) Date of filing: 28.04.2009
(51) Int. Cl.: H04M 3/58, H04M 3/42

(54) **Method and system for pulling a call**
Verfahren und Vorrichtung zur Anrufsexpansion
Procédé et système pour effectuer des appels

(43) Date of publication of application: 03.11.2010
(73) Proprietor: RESEARCH IN MOTION LIMITED, Waterloo, Ontario N2L 3W8 (CA)
(72) Inventor: Yap, Shen-Yuan Michael, Sherman Oaks, CA 91403 (US); Werner, Colin Mark, Waterloo Ontario N2L 5Z5 (CA)
(74) Representative: Patel, Binesh

(56) References cited:
- US-A- 5 761 277
- US-A1- 2002 034 289
- US-A1- 2006 177 032
- US-A1- 2007 004 410

## Description

### FIELD

The present application relates to call management systems and, more particularly, to methods and systems for transferring a call from a first communication device to a second communication device.

### BACKGROUND

Users of communication devices often have multiple communication devices. For example, such users may be associated with wireless devices such as a Smartphone, analog or digital telephones such as a network phone or a home phone, soft phones operating on computers, such as Skype ^{™}, etc.

A user may want to transfer calls between different devices. For example, a user engaged in a call on a desktop phone may prefer to continue the call on another phone, such as a mobile phone.

Thus, there remains a need for improved systems for transferring calls.

US Publication Number 2007/0004410 A1 provides a method of supporting a mid-call hand-off feature in a telecommunications network.

US Patent Number 5,716,277 relates to personal communications and, more particularly, to systems setting up communications between a caller and a called individual using a combination of paging and call bridging.

### BRIEF DESCRIPTION OF THE DRAWINGS

Reference will now be made, by way of example, to the accompanying drawings which show example embodiments of the present application, and in which:

Figure 1 shows, in block diagram form, an example system for managing enterprise-related calls, including an enterprise communications platform;

Figure 2 shows, in block diagram form, further details of an embodiment of the enterprise communications platform;

Figure 3 shows another embodiment of the enterprise communications platform;

Figure 4 shows yet another embodiment of the enterprise communications platform;

Figure 5 shows further details of the enterprise communications platform of Figure 3;

Figure 6 shows, in block diagram form, an example enterprise communication platform for use in an embodiment of the system of Figure 1;

Figure 7 shows, in block diagram form, an example communication device for use in an embodiment of the system of Figure 1;

Figure 8 shows a flowchart of a method of transferring a call in accordance with embodiments of the present disclosure;

Figure 9 shows a flowchart of a method of transferring a call in accordance with another embodiment of the present disclosure;

Figure 10 shows a flowchart illustrating an ANI pooling method for transferring a call in accordance with embodiments of the present disclosure;

Figure 11 shows a flowchart illustrating a DNIS pooling method for transferring a call in accordance with embodiments of the present disclosure; and

Figure 12 shows a flowchart illustrating an ANI mangling method for transferring a call in accordance with embodiments of the present disclosure.

Similar reference numerals may have been used in different figures to denote similar components.

### DESCRIPTION OF EXAMPLE EMBODIMENTS

In one aspect, the present application provides a method of transferring a call from a first device to a second device. The method comprises: a) transmitting a notification from a call management server to the second device to indicate that the first device is engaged in a call that is transferable; b) receiving, at the call management server, a transfer request from the second device to transfer the call from the first device to the second device; and c) in response to the receipt of the transfer request: connecting the second device to the call, and disconnecting the first device from the call.

In another aspect, the present application provides a call management server. The call management server includes a communication bridge for connecting calls. The call management server further includes at least one processor and a notification module associated with the at least one processor. The notification module is configured to transmit a notification to a second device to indicate that the first device is engaged in a call that is transferable. The call management server also includes a request processing module associated with the at least one processor. The request processing module is configured to direct the connection bridge to connect the call to the second device upon receiving a request from the second device to transfer the call from the first device to the second device and to subsequently direct the connection bridge to disconnect the call from the first device.

In yet another aspect, the present application provides a computer program product comprising a computer readable storage medium having encoded thereon computer instructions for transferring a call from a first device to a second device. The computer executable instructions include computer executable instructions for transmitting a notification from a call management server to the second device to indicate that the first device is engaged in a call that is transferable. The computer executable instructions further include computer executable instructions, executable in response to the receipt of a transfer request from the second device requesting that the call be transferred from the first device to the second device, the instructions comprising instructions for connecting the second device to the call and instructions for disconnecting the first device from the call.

Other aspects of the present application will be apparent to those of ordinary skill in the art from a review of the following detailed description in conjunction with the drawings.

Embodiments of the present application are not limited to any particular operating system, mobile device architecture, server architecture, or computer programming language.

The present application relates to the control and management of communications. Although reference may be made to "calls" in the description of example embodiments below, it will be appreciated that the described systems and methods are applicable to session-based communications in general and not limited to voice calls. It will also be appreciated that the systems and methods may not be limited to sessions and may be applicable to messaging-based communications in some embodiments.

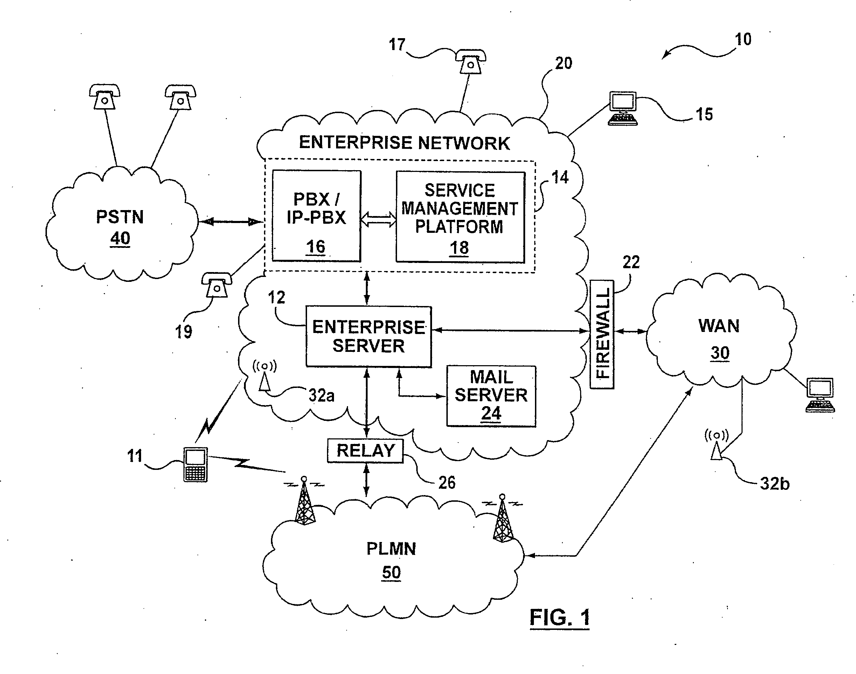

Reference is now made to Figure 1, which shows, in block diagram form, an example system, generally designated 10, for the control and management of communications. The system 10 includes an enterprise or business system 20, which in many embodiments includes a local area network (LAN). In the description below, the enterprise or business system 20 may be referred to as an enterprise network 20. It will be appreciated that the enterprise network 20 may include more than one network and may be located in multiple geographic areas in some embodiments.

The enterprise network 20 may be connected, often through a firewall 22, to a wide area network (WAN) 30, such as the Internet. The enterprise network 20 may also be connected to a public switched telephone network (PSTN) 40 via direct inward dialing (DID) trunks or primary rate interface (PRI) trunks.

The enterprise network 20 may also communicate with a public land mobile network (PLMN) 50, which may also be referred to as a wireless wide area network (WWAN) or, in some cases, a cellular network. The connection with the PLMN 50 may be made via a relay 26, as known in the art.

The enterprise network 20 may also provide a wireless local area network (WLAN) 32a featuring wireless access points. Other WLANs 32 may exist outside the enterprise network 20. For example, WLAN 32b may be connected to WAN 30.

The system 10 may include a number of enterprise-associated mobile devices 11 (only one shown). The mobile devices 11 may include devices equipped for cellular communication through the PLMN 50, mobile devices equipped for Wi-Fi communications over one of the WLANs 32, or dual-mode devices capable of both cellular and WLAN communications. WLANs 32 may be configured in accordance with one of the IEEE 802.11 specifications.

It will be understood that the mobile devices 11 include one or more radio transceivers and associated processing hardware and software to enable wireless communications with the PLMN 50 and/or one of the WLANs 32. In various embodiments, the PLMN 50 and mobile devices 11 may be configured to operate in compliance with any one or more of a number of wireless protocols, including GSM, GPRS, CDMA, EDGE, UMTS, EvDO, HSPA, 3GPP, or a variety of others. It will be appreciated that the mobile device 11 may roam within the PLMN 50 and across PLMNs, in known manner, as the user moves. In some instances, the dual-mode mobile devices 11 and/or the enterprise network 20 are configured to facilitate roaming between the PLMN 50 and a WLAN 32, and are thus capable of seamlessly transferring sessions (such as voice calls) from a connection with the cellular interface of the dual-mode device 11 to the WLAN 32 interface of the dual-mode device 11, and vice versa.

The enterprise network 20 typically includes a number of networked servers, computers, and other devices. For example, the enterprise network 20 may connect one or more desktop or laptop computers 15 (one shown). The connection may be wired or wireless in some embodiments. The enterprise network 20 may also connect to one or more digital telephone sets 17 (one shown).

The enterprise network 20 may include one or more mail servers, such as mail server 24, for coordinating the transmission, storage, and receipt of electronic messages for client devices operating within the enterprise network 20. Typical mail servers include the Microsoft Exchange Server^{™} and the IBM Lotus Domino^{™} server. Each user within the enterprise typically has at least one user account within the enterprise network 20. Associated with each user account is message address information, such as an e-mail address. Messages addressed to a user message address are stored on the enterprise network 20 in the mail server 24. The messages may be retrieved by the user using a messaging application, such as an email client application. The messaging application may be operating on a user's computer 15 connected to the enterprise network 20 within the enterprise. In some embodiments, the user may be permitted to access stored messages using a remote computer, for example at another location via the WAN 30 using a VPN connection. Using the messaging application, the user may also compose and send messages addressed to others, within or outside the enterprise network 20. The messaging application causes the mail server 24 to send a composed message to the addressee, often via the WAN 30.

The relay 26 serves to route messages received over the PLMN 50 from the mobile device 11 to the corresponding enterprise network 20. The relay 26 also pushes messages from the enterprise network 20 to the mobile device 11 via the PLMN 50.

The enterprise network 20 also includes an enterprise server 12. Together with the relay 26, the enterprise server 12 functions to redirect or relay incoming e-mail messages addressed to a user's e-mail address within the enterprise network 20 to the user's mobile device 11 and to relay incoming e-mail messages composed and sent via the mobile device 11 out to the intended recipients within the WAN 30 or elsewhere. The enterprise server 12 and relay 26 together facilitate "push" e-mail service for the mobile device 11 enabling the user to send and receive e-mail messages using the mobile device 11 as though the user were connected to an e-mail client within the enterprise network 20 using the user's enterprise-related e-mail address, for example on computer 15.

As is typical in many enterprises, the enterprise network 20 includes a Private Branch exchange (although in various embodiments the PBX may be a standard PBX or an IP-PBX, for simplicity the description below uses the term PBX to refer to both) 16 having a connection with the PSTN 40 for routing incoming and outgoing voice calls for the enterprise. The PBX 16 is connected to the PSTN 40 via DID trunks or PRI trunks, for example. The PBX 16 may use ISDN signaling protocols for setting up and tearing down circuit-switched connections through the PSTN 40 and related signaling and communications. In some embodiments, the PBX 16 may be connected to one or more conventional analog telephones 19. The PBX 16 is also connected to the enterprise network 20 and, through it, to telephone terminal devices, such as digital telephone sets 17, softphones operating on computers 15, etc. Within the enterprise, each individual may have an associated extension number, sometimes referred to as a PNP (private numbering plan), or direct dial phone number. Calls outgoing from the PBX 16 to the PSTN 40 or incoming from the PSTN 40 to the PBX 16 are typically circuit-switched calls. Within the enterprise, e.g. between the PBX 16 and terminal devices, voice calls are often packet-switched calls, for example Voice-over-IP (VoIP) calls.

The enterprise network 20 may further include a Service Management Platform (SMP) 18 for performing some aspects of messaging or session control, like call control and advanced call processing features. The SMP 18 may, in some cases, also perform some media handling. Collectively the SMP 18 and PBX 16 may be referred to as the enterprise communications platform or call management server, generally designated 14. It will be appreciated that the enterprise communications platform 14 and, in particular, the SMP 18, is implemented on one or more servers having suitable communications interfaces for connecting to and communicating with the PBX 16 and/or DID/PRI trunks. Although the SMP 18 may be implemented on a stand-alone server, it will be appreciated that it may be implemented into an existing control agent/server as a logical software component. As will be described below, the SMP 18 may be implemented as a multi-layer platform.

The enterprise communications platform 14 implements the switching to connect session legs and may provide the conversion between, for example, a circuit-switched call and a VoIP call, or to connect legs of other media sessions. In some embodiments, in the context of voice calls the enterprise communications platform 14 provides a number of additional functions including automated attendant, interactive voice response, call forwarding, voice mail, etc. It may also implement certain usage restrictions on enterprise users, such as blocking international calls or 1-900 calls. As will be described in greater details below, in some embodiments, the communication platform 14 may implement advanced ringing schemes which provide for simultaneous and/or sequential ringing of multiple communication devices. In many embodiments, Session Initiation Protocol (SIP) may be used to set-up, manage, and terminate media sessions for voice calls. Other protocols may also be employed by the enterprise communications platform 14, for example, Web Services, Computer Telephony Integration (CTI) protocol, Session Initiation Protocol for Instant Messaging and Presence Leveraging Extensions (SIMPLE), and various custom Application Programming Interfaces (APIs), as will be described in greater detail below.

One of the functions of the enterprise communications platform 14 is to extend the features of enterprise telephony to the mobile devices 11. For example, the enterprise communications platform 14 may allow the mobile device 11 to perform functions akin to those normally available on a standard office telephone, such as the digital telephone set 17 or analog telephone set 19. Example features may include direct extension dialing, enterprise voice mail, conferencing, call transfer, call park, etc.

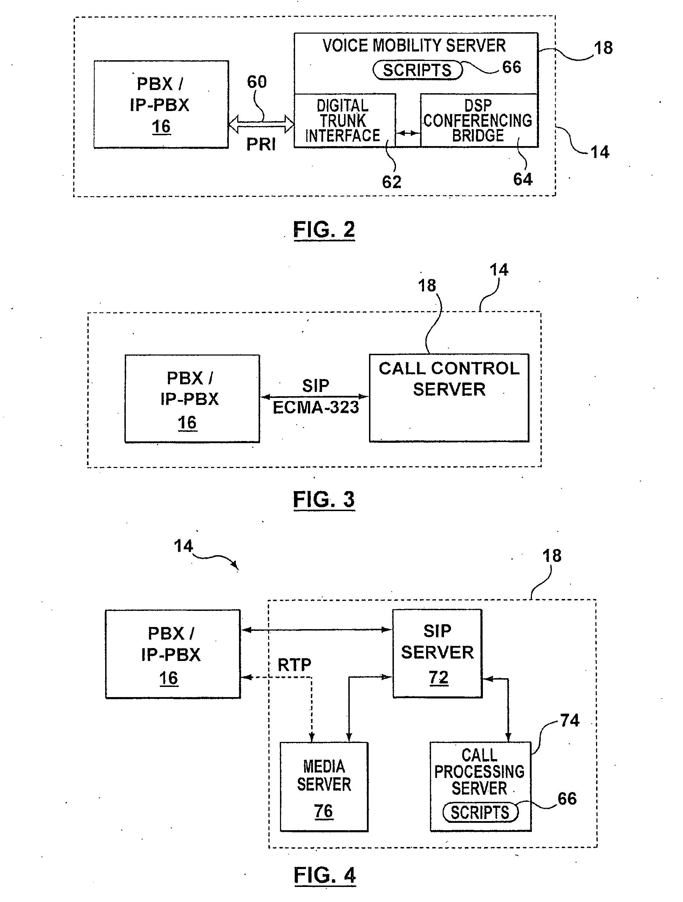

Reference is now made to Figures 2 to 4, which show example embodiments of the enterprise communications system 14. Again, although references are made below to "calls" or call-centric features it will be appreciated that the architectures and systems depicted and described are applicable to session-based communications in general and, in some instances, to messaging-based communications.

Figure 2 illustrates an embodiment intended for use in a circuit-switched TDM context. The PBX 16 is coupled to the SMP 18 via PRI connection 60 or other suitable digital trunk. In some embodiments, the PRI connection 60 may include a first PRI connection, a second PRI connection, and a channel service unit (CSU), wherein the CSU is a mechanism for connecting computing devices to digital mediums in a manner that allows for the retiming and regeneration of incoming signals. It will be appreciated that there may be additional or alternative connections between the PBX 16 and the SMP 18.

In this embodiment, the SMP 18 assumes control over both call processing and the media itself. This architecture may be referred to as "First Party Call Control". Many of the media handling functions normally implemented by the PBX 16 are handled by the SMP 18 in this architecture. Incoming calls addressed to any extension or direct dial number within the enterprise, for example, are always first routed to the SMP 18. Thereafter, a call leg is established from the SMP 18 to the called party within the enterprise, and the two legs are bridged. Accordingly, the SMP 18 includes a digital trunk interface 62 and a digital signal processing (DSP) conferencing bridge 64. The DSP conferencing bridge 64 performs the bridging of calls for implementation of various call features, such as conferencing, call transfer, etc. The digital trunk interface 62 may be implemented as a plurality of telephonic cards, e.g. Intel Dialogic cards, interconnected by a bus and operating under the control of a processor. The digital trunk interface 62 may also be partly implemented using a processor module such as, for example, a Host Media Processing (HMP) processor.

The SMP 18 may include various scripts 66 for managing call processing. The scripts 66 are implemented as software modules, routines, functions, etc., stored in non-volatile memory and executed by the processor of the SMP 18. The scripts 66 may implement call flow logic, business logic, user preferences, call service processes, and various feature applications.

Figure 3 shows another embodiment in which the PBX 16 performs the functions of terminating and/or bridging media streams, but call control functions are largely handled by the SMP 18. In this embodiment, the SMP 18 may be referred to as a call control server 18. This architecture may be referred to as "Third-Party Call Control".

The call control server 18 is coupled to the PBX 16, for example through the LAN, enabling packet-based communications and, more specifically, IP-based communications. In one embodiment, communications between the PBX 16 and the call control server 18 are carried out in accordance with SIP. In other words, the call control server 18 uses SIPbased communications to manage the set up, tear down, and control of media handled by the PBX 16. In one example embodiment, the call control server 18 may employ a communications protocol conforming to the ECMA-269 or ECMA-323 standards for Computer Supported Telecommunications Applications (CSTA).

Figure 4 shows yet another embodiment of the enterprise communications system 14. This embodiment reflects the adaptation of an existing set of call processing scripts to an architecture that relies on third-party call control, with separate call control and media handling. The SMP 18 includes a call processing server 74. The call processing server 74 includes the scripts or other programming constructs for performing call handling functions. The SMP 18 also includes a SIP server 72 and a media server 76. The separate SIP server 72 and media server 76 logically separate the call control from media handling. The SIP server 72 interacts with the call processing server 74 using a computer-implemented communications handling protocol, such as one of the ECMA-269 or ECMA-323 standards. These standards prescribe XML based messaging for implementing Computer Supported Telecommunications Applications (CSTA).

The SIP server 72 interacts with the media server 76 using SIPbased media handling commands. For example, the SIP server 72 and media server 76 may communicate using Media Server Markup Language (MSML) as defined in IETF document Saleem A., "Media Server Markup Language", Internet Draft, draft-saleem-msml-07, August 7, 2008. The media server 76 may be configured to perform Host Media Processing (HMP).

Other architectures or configurations for the enterprise communications system 14 will be appreciated by those ordinarily skilled in the art.

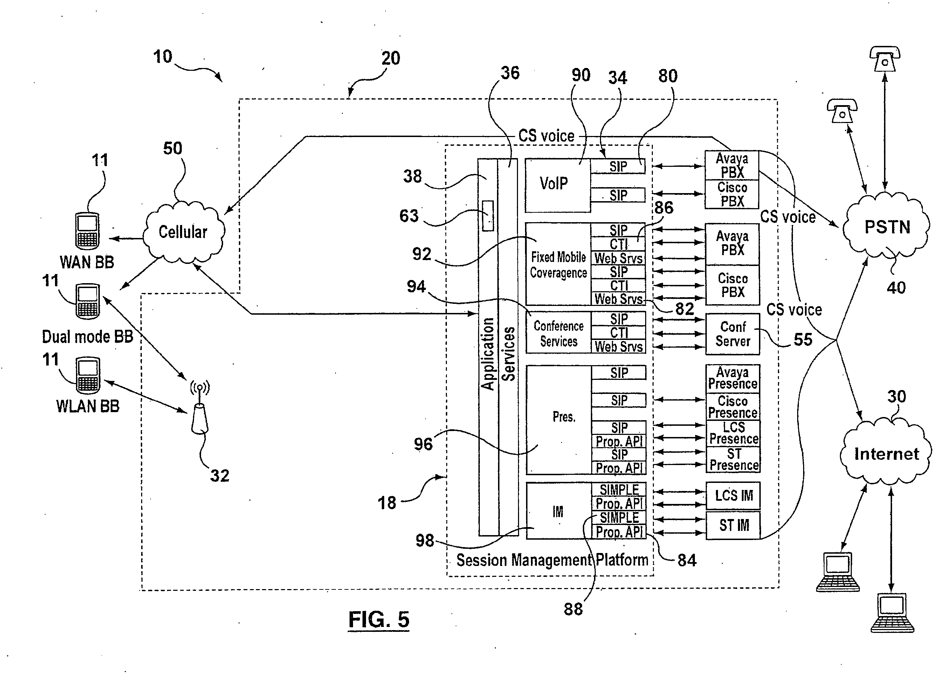

Reference is now made to Figure 5, which shows another embodiment of the enterprise communications system 14 with a Third Party Call Control architecture. In this embodiment, the SMP 18 is a multi-layer platform that includes a protocol layer 34, a services layer 36 and an application layer 38. The protocol layer 34 includes a plurality of interface protocols configured for enabling operation of corresponding applications in the application layer 38. The services layer 36 includes a plurality of services that can be leveraged by the interface protocols to create richer applications. Finally, the application layer 38 includes a plurality of applications that are exposed out to the communication devices and that leverage corresponding ones of the services and interface protocols for enabling the applications.

Specifically, the protocol layer 34 preferably includes protocols which allow media to be controlled separate from data. For example, the protocol layer 34 can include, among other things, a Session Initiation Protocol or SIP 80, a Web Services protocol 82, an Application Programming Interface or API 84, a Computer Telephony Integration protocol or CTI 86, and a Session Initiation Protocol for Instant Messaging and Presence Leveraging Extensions or SIMPLE protocol 88. It is contemplated that the interface protocols 80-88 are plug-ins that can interface directly with corresponding servers in the enterprise network 20, which will be further described below.

For the purposes of this disclosure, SIP 80 will be utilized, although it is appreciated that the system 10 can operate using the above disclosed or additional protocols. As known by those of ordinary skill in the art, SIP is the IETF (Internet Engineering Task Force) standard for multimedia session management, and more specifically is an application-layer control protocol for establishing, maintaining, modifying and terminating multimedia sessions between two or more endpoints. As further known by those of ordinary skill in the art, the SIP protocol 80 includes two interfaces for signaling: SIP-Trunk (hereinafter referred to as "SIP-T") and SIP-Line (hereinafter referred to as "SIP-L"). Specifically, the SIP-T interface is utilized when the endpoint is a non-specific entity or not registered (i.e., when communicating between two network entities). In contrast, the SIP-L interface is utilized when the endpoint is registered (i.e., when dialing to a specific extension). The specific operation of the system 10 utilizing SIP 80 will be described in further detail below.

The SMP 18 also includes a plurality of enablers, among other things, a VoIP enabler 90, a Fixed Mobile Convergence or FMC enabler 92, a conference services enabler 94, a presence enabler 96 and an Instant Messaging or IM enabler 98. Each of the enablers 90-98 are used by corresponding services in the services layer 36 that combine one or more of the enablers. Each of the applications in the application layer 38 is then combined with one or more of the services to perform the desired application.
For example, a phone call service may use the VoIP or PBX enabler, and an emergency response application may use the phone call service, an Instant Messenger service, a video call service, and email service and/or a conference service.

The application layer 38 may include a conference services application 63 that, together with the conference services enabler 94, enables multiple communication devices (including desk telephones and personal computers) to participate in a conference call through use of a centralized conference server 55. As seen in Figure 5, the conference server 55 is provided in the enterprise network 20 and is in communication with the conference services enabler 94 preferably through the SIP protocol 80, although it is recognized that additional protocols that control media separate from data may be appropriate, such as the Web Services protocol 82 or the CTI protocol 86. The conference call server 55 is configured for directing media and data streams to and from one or more communication devices (i.e., mobile devices 11, telephones 17, and computers 15).

Referring again to Figure. 1, in some embodiments, the enterprise communications platform 14 is a call management server which is adapted to implement a call transfer which transfers a call from a first device to a second device. The devices may be, for example, analog telephones 19 connected to the PBX 16, digital telephone sets 17, soft phones operating on computers 15 connected to the enterprise network 20, or mobile devices 11. Accordingly, the term "communication device" as used herein, may include a device of any type which may be used for session-based communications. As will be described in greater detail below, in some embodiments the enterprise communication platform 14 is configured to permit communication devices to "pull" a call from another device. That is, a second communication device may request that the enterprise communication platform 14 transfer a call from a first communication device to the second device.

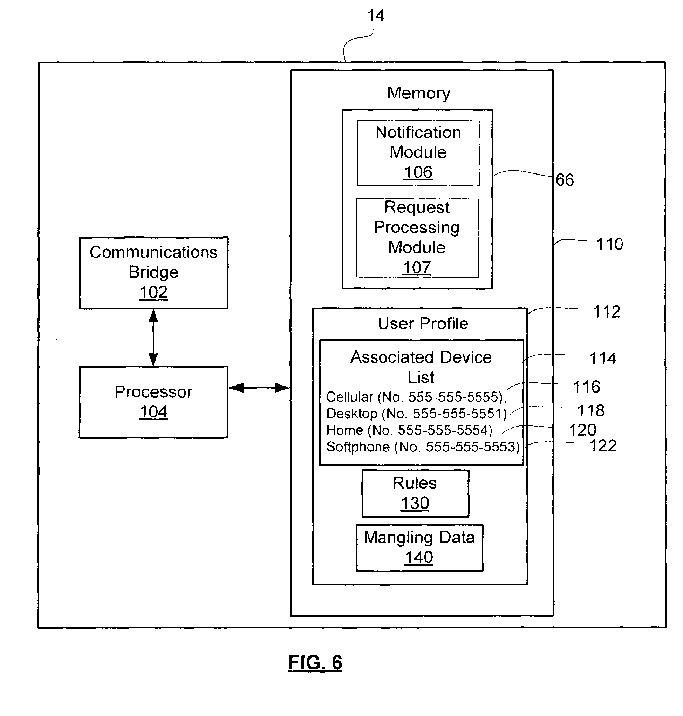

Reference is now made to Figure 6 which shows an example of an enterprise communications platform 14. It will be understood from the discussion above regarding Figures 2 to 5, that the specific hardware required to implement the enterprise communications platform 14 will vary based on the particular network within which it operates. Typically, however, the enterprise communications platform 14 will include a communications bridge 102, a controller, such as one or more of the processor 104, and at least one memory 110 connected to the controller. The processor 104 operates under stored program control and executes computer code, such as scripts 66 stored in memory 110 such as persistent memory. In some embodiments, as will be discussed in greater detail below, the scripts 66 include a notification module 106 for generating a notification signal. The notification signal may be transmitted to a second communication device, which is associated with a first communication device, to inform the second communication device that the first communication device is engaged in a call which is transferable.

It will be appreciated that, in some systems, not all calls will be transferable. In some embodiments, a device, such as, for example, an analog telephone, may be engaged in a telephone call which is not managed by the enterprise communications platform 14. For example, two communication devices engaged in a telephone call may communicate directly through the PSTN 40, without the assistance of the enterprise communications platform 14. Since the enterprise communications platform 14 is not engaged in such calls, the enterprise communications platform 14 may be unable to transfer such calls to another device. That is, in some embodiments, calls may be classified as either "transferable" or "not-transferable." Transferable calls are those which the enterprise communications platform 14 can transfer and non-transferable calls are calls which the enterprise communications platform 14 cannot transfer. In such systems, the notification module 106 may be configured to transmit a notification signal to devices to inform them if calls are transferable. In some embodiments, the enterprise communications platform 14 will only be aware of transferable calls, since non-transferable calls are not routed through the enterprise communications platform 14.

In some embodiments, the memory 110 includes a list 114 of associated devices. The list 114 creates an association between two or more devices 116, 118, 120, 122. For example, in the example shown in Figure 6, a cellular phone 116, a desktop phone 118, a home phone 120, and a softphone 122 are all associated with one another in the list 114. In some embodiments, the notification module 106 is configured to notify at least one of the devices 116, 118, 120, 122 in the list 114 when another of the devices 116, 118, 120, 122 is engaged in a transferable call. That is, the notification module 106 is configured to determine, from the list 114 in the memory 110 whether there are any devices associated with a device currently engaged in a transferable call. If there are any such devices, the notification module may transmit a notifier to those devices. The notifier may be transmitted over a data channel, for example.

It will be appreciated that the association between devices in the memory 110 will not, in all cases, be implemented using a list structure. For example, in other embodiments, a database may be used to create an association between devices. In yet further embodiments, an association between devices may be created using a look up table.

In some embodiments, the associated device list 114 may be included as part of a user profile 112. Each user of the system may have an associated user profile, specifying various attributes of that user. The user profile 112 may also include, for example, a user's name, title, telephone number, address, etc.

While the memory 110 of the enterprise communication platform 14 has been illustrated as a single component, it will be appreciated by a person skilled in the art that the memory 110 will typically be comprised of multiple memory components. For example, the memory 110 may include any one, or a combination of: random access memory, flash memory, a hard disk drive, an optical storage medium, etc.

Those skilled in the art will appreciate that the scripts 66, such as the notification module 106, or parts thereof may be temporarily loaded into volatile memory such as RAM. The RAM is used for storing runtime data variables and other types of data or information, as will be understood by those skilled in the art. Although specific functions may be described for various types of memory, this is merely an example, and those skilled in the art will appreciate that a different assignment of functions to types of memory could also be used.

The memory 110 in the enterprise communication platform 14 may also store mangling data 140 associated with each user or each device 114, 116, 118, 120. The mangling data 140 is data which is programmed into both the memory 110 of the enterprise communications platform 14 and memory of at least one device. As will be explained in greater detail below, the mangling data 140 acts as an identifier and may be used to identify the source of a communication. For example, in some embodiments, the mangling data 140 is included in Automatic Number Identification (ANI) data in received voice communications. When a call is received, the mangling data 140 may be stripped from the ANI data and used to determine the source of a communication.

In some embodiments, it may not be desirable to notify all devices associated with a device which is currently engaged in a transferable call. Some of the associated devices may not be equipped to either properly interpret the notification or request the transfer of the call. Accordingly, in some embodiments, the memory 110 may also include rules 230 specifying conditions under which devices 116, 118, 120, 122 are to be notified when an associated device 116, 118, 120, 122 is engaged in a transferable call. That is, the rules 230 may specify which devices 116, 118, 120, 122 are to be notified.

The user profile 112 and the association between devices may be set, for example, by a system administrator or by the user. For example, in some embodiments, a user may configure his or her own user profile 112 by manipulating an input device to interact with a graphical user interface on a communication device. The communication device may transmit the updated user profile 112 to the enterprise communications platform 14 where it is saved to memory 110.

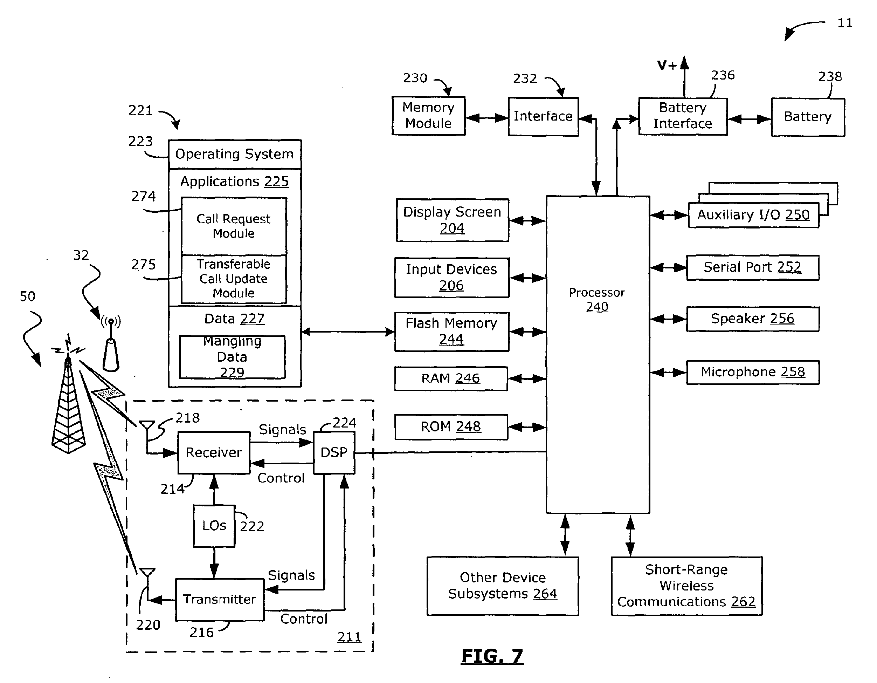

Referring now to Figure 7, an example communication device in which embodiments of the present disclosure may be applied is illustrated. In this example embodiment, the communication device is a handheld mobile electronic device 11 having two-way communication capabilities such as, for example, data communication capabilities, voice communication capabilities or the capability to communicate with other computer systems, for example, via the Internet. It will be appreciated that, while the examples discussed herein are often described with reference to a mobile device 11, the examples may also be applied to devices which have a hard-line connection to the enterprise network 20. For example, the methods described herein may be applied to analog telephones 19 connected to the PBX 16, digital telephone sets 17, soft phones operating on computers 15 connected to the enterprise network 20, or mobile devices 11.

The mobile device 11 includes a controller comprising at least one processor 240 which controls the overall operation of the mobile device 11. The processor 240 interacts with device subsystems including a display screen 204 such as a liquid crystal display (LCD), one or more input devices 206, a wireless communication subsystem 211 which performs communication functions and exchanges radio frequency signals with a wireless network, flash memory 244, random access memory (RAM) 246, read only memory (ROM) 248, auxiliary input/output (I/O) subsystems 250, data port 252 such as serial data port such as a Universal Serial Bus (USB) data port, speaker 256, microphone 258, short-range communication subsystem 262, and other device subsystems generally designated as 264. Some of the subsystems shown in Figure 7 perform communication-related functions, whereas other subsystems may provide "resident" or on-device functions. It will be appreciated that other device configurations are also possible and that not all communication devices to which methods according to the present application may be applied will have all of the elements described above.

The mobile device 11 includes a rigid case (not shown) for housing the components of the mobile device 11. The rigid case is configured to be held in a user's hand while the mobile device 11 is in use

The input devices 206 may take a variety of forms. For example, in some embodiments, the input devices 206 may comprise any combination of a keyboard, control buttons and a navigation device such as a rotatable and depressible ("clickable") thumbwheel or scroll wheel, or a depressible ("clickable") rolling member or trackball. In some embodiments, the input devices 206 are positioned towards a bottom end of the mobile device 11 for actuation by the thumbs or other fingers of the device user while it is being held in one or two hands, depending on the embodiment. In other embodiments, the input devices 206 may be located elsewhere; for example control buttons may be located on a top end or any side of the device 11, and a scroll wheel may be located on a side of the device 11 for convenient thumb scrolling by the hand in which the device 11 is held.

In some embodiments, the display screen 204 may be a touchscreen display which acts both as a display device and an input device 206. The touchscreen display may be constructed using a touch-sensitive input surface connected to an electronic controller and which overlays the display screen 204. The touch-sensitive overlay and the electronic controller provide a touch-sensitive input device and the processor 240 interacts with the touch-sensitive overlay via the electronic controller.

The mobile device 11 may provide a graphical user interface (GUI) on the display screen 204 for controlling the operation of the device 11. The GUI, together with the input devices, may permit a user to request, from the enterprise communications platform 14 (Figure 1) a notification specifying whether any other devices associated with the mobile device 11 are currently engaged in a call which may be transferred to the mobile device 11. As per typical GUIs, the device user may cause a menu to be displayed on the display screen 204 having a number of menu item items which can be selected. One of those items may be a "pull call" item, permitting a user to request the transfer of a call to the device.

The processor 240 of the mobile device 11 operates under stored program control and executes software modules 221 stored in memory such as persistent memory, for example, in the flash memory 244. As illustrated in Figure 7, the software modules 221 comprise operating system software 223 and software applications 225 including a call request module 274 for sending a request to the enterprise communications platform 14 (Figure 1) to request that a call be transferred to the mobile device 11, and a transferrable call update module 275 for sending a request to the enterprise communications platform 14 (Figure 1) to request that a notification be transmitted to the mobile device 11 to notify the mobile device 11 whether a call may be transferred to the mobile device 11.

The call request module 274 and the transferable call update module 275 may, among other things, be implemented through a stand-alone software application, or combined together in one or more of the operating system 223 and applications 225.

Those skilled in the art will appreciate that the software modules 221 or parts thereof may be temporarily loaded into volatile memory such as the RAM 246. The RAM 246 is used for storing runtime data variables and other types of data or information, as will be apparent to those skilled in the art. Although specific functions are described for various types of memory, this is merely an example, and those skilled in the art will appreciate that a different assignment of functions to types of memory could also be used.

The software modules 221 may also include a range of other applications not specifically shown in Figure 7 including, for example, any one or a combination of an address book application, a messaging application, a calendar application, and a notepad application. In some embodiments, the software modules 221 include one or more of a Web browser application (i.e., for a Web-enabled mobile communication device 200), an email message application, a push content viewing application, a voice communication (i.e. telephony) application and a mapping application. The software modules 221 may include layout information defining the placement of particular fields and graphic elements (e.g. text fields, input fields, icons, etc.) in the user interface (i.e. the display screen 204) according to the application.

In some embodiments, the auxiliary input/output (I/O) subsystems 250 may comprise an external communication link or interface; for example, an Ethernet connection. The auxiliary I/O subsystems 250 may also comprise a vibrator for providing vibratory notifications in response to various events on the mobile device 11 such as receipt of an electronic communication or incoming phone call, or for other purposes such as haptic feedback.

In some embodiments, the mobile device 11 also includes a removable memory card 230 (typically comprising flash memory) and a memory card interface 232. Network access is typically associated with a subscriber or user of the mobile device 11 via the memory card 230, which may be a Subscriber Identity Module (SIM) card for use in a GSM network or other type of memory card for use in the relevant wireless network type. The memory card 230 is inserted in or connected to the memory card interface 232 of the device 11 in order to operate in conjunction with the wireless network 204.

The mobile device 11 stores data 227 in an erasable persistent memory, which in one example embodiment is the flash memory 244. In various embodiments, the data 227 may include service data comprising information required by the communication device 11 to establish and maintain communication with the wireless network 204. The data 227 may also include user application data such as email messages, address book and contact information, calendar and schedule information, notepad documents, image files, and other commonly stored user information stored on the communication device 102 by its user, and other data. The data 227 stored in the persistent memory (e.g. flash memory 244) of the communication device 102 may be organized, at least partially, into a number of databases each containing data items of the same data type or associated with the same application. For example, email messages, contact records, and task items may be stored in individual databases within the device memory.

In some embodiments, the memory 244 may also store data 227 which may be used to negotiate the transfer of a call to the device, such as mangling data 229. The mangling data 229 is unique data which is preprogrammed into both the mobile device 11 and the enterprise communications platform 14 (Figure 1). That is, the mangling data 229 in the mobile device corresponds to the mangling data 140 in the enterprise communication platform 14 (Figure 6). The mangling data 229 may be used to identify the source of a communication. For example, in some embodiments, which will be described in greater detail below, the mangling data 229 is included in ANI data of a voice communication. When a call is received, the mangling data may be stripped from the ANI data and used to determine the source of a communication. The mangling data 229, 140 may be useful in identifying the source of a voice call when there are no data channels available to set up a call transfer.

The serial data port 252 may be used for synchronization with a user's host computer system (not shown). The serial data port 252 enables a user to set preferences through an external device or software application and extends the capabilities of the mobile device 11 by providing for information or software downloads to the mobile device 11 other than through the wireless network 204. The alternate download path may, for example, be used to load an encryption key onto the mobile device 11 through a direct, reliable and trusted connection to thereby provide secure device communication.

The mobile device 11 may also include a battery 238 as a power source, which may be one or more rechargeable batteries that may be charged, for example, through charging circuitry coupled to a battery interface such as the serial data port 252. The battery 238 provides electrical power to at least some of the electrical circuitry in the mobile device 11, and the battery interface 236 provides a mechanical and electrical connection for the battery 238. The battery interface 236 is coupled to a regulator (not shown) which provides power V+ to the circuitry of the mobile device 11.

The short-range communication subsystem 262 is an additional optional component which provides for communication between the mobile device 102 and different systems or devices, which need not necessarily be similar devices. For example, the subsystem 262 may include an infrared device and associated circuits and components, or a wireless bus protocol compliant communication mechanism such as a Bluetooth® communication module to provide for communication with similarly-enabled systems and devices (Bluetooth® is a registered trademark of Bluetooth SIG, Inc.).

A predetermined set of applications that control basic device operations, including data and possibly voice communication applications may be installed on the device 11 during or after manufacture. Additional applications and/or upgrades to the operating system 221 or other software modules 221 may also be loaded onto the mobile device 11 through the wireless network 204, the auxiliary I/O subsystem 250, the serial port 252, the short-range communication subsystem 262, or other suitable subsystem 264 other wireless communication interfaces. The downloaded programs or code modules may be permanently installed, for example, written into the program memory (i.e. the flash memory 244), or written into and executed from the RAM 246 for execution by the processor 240 at runtime. Such flexibility in application installation increases the functionality of the device 11 and may provide enhanced on-device functions, communication-related functions, or both. For example, secure communication applications may enable electronic commerce functions and other such financial transactions to be performed using the mobile device 11.

The mobile device 11 may provide two principal modes of communication: a voice communication mode and an optional data communication mode. In the data communication mode, a received data signal such as a text message, an email message, or Web page download will be processed by the communication subsystem 211 and input to the processor 240 for further processing. For example, a downloaded Web page may be further processed by a browser application or an email message may be processed by an email message application and output to the display 204. A user of the device 11 may also compose data items, such as email messages, for example, using the input device 206 in conjunction with the display device 204 and possibly the auxiliary I/O device 250. These composed items may be transmitted through the communication subsystem 211 over the wireless network 204.

In the voice communication mode, the mobile device 11 provides telephony functions and operates as a typical cellular phone. The overall operation is similar to the data mode, except that the received signals are output to the speaker 256 and signals for transmission are generated by a transducer such as the microphone 258. The telephony functions are provided by a combination of software/firmware (i.e., the voice communication module) and hardware (i.e., the microphone 258, the speaker 256 and input devices). Alternative voice or audio I/O subsystems, such as a voice message recording subsystem, may also be implemented on the mobile device 11. Although voice or audio signal output is typically accomplished primarily through the speaker 256, the display device 204 may also be used to provide an indication of the identity of a calling party, duration of a voice call, or other voice call related information.

Referring still to Figure 7, the wireless communication subsystem 211 will now be described in further detail. Depending on the functionality provided by the mobile device 11, in various embodiments the device may, for example, be a multiple-mode communication device configured for both data and voice communication, a Smartphone, a mobile telephone or a PDA (personal digital assistant) enabled for wireless communication, or a computer system with a wireless modem.

The wireless communication subsystem 211 exchanges radio frequency signals with a wireless network which may be, for example, the PLMN 50. The wireless communication subsystem 211 may also be configured to communicate over the WLANs 32.

The communication subsystem 211 includes a receiver 214, a transmitter 216, and associated components, such as one or more antenna elements 218 and 220, local oscillators (LOs) 222, and a processing module such as a digital signal processor (DSP) 224. The antenna elements 218 and 220 may be embedded or internal to the mobile device 11 and a single antenna may be shared by both receiver and transmitter, as is known in the art. As will be apparent to those skilled in the field of communication, the particular design of the wireless communication subsystem 211 depends on the wireless network in which mobile device 11 is intended to operate.

The mobile device 11 may send and receive communication signals over the wireless network after the required network registration or activation procedures have been completed. Signals received by the antenna 218 through the wireless network 101 are input to the receiver 214, which may perform such common receiver functions as signal amplification, frequency down conversion, filtering, channel selection, etc., as well as analog-to-digital (A/D) conversion. A/D conversion of a received signal allows more complex communication functions such as demodulation and decoding to be performed in the DSP 224. In a similar manner, signals to be transmitted are processed, including modulation and encoding, for example, by the DSP 224. These DSP-processed signals are input to the transmitter 216 for digital-to-analog (D/A) conversion, frequency up conversion, filtering, amplification, and transmission to the wireless network 101 via the antenna 220. The DSP 224 not only processes communication signals, but may also provide for receiver and transmitter control. For example, the gains applied to communication signals in the receiver 214 and the transmitter 216 may be adaptively controlled through automatic gain control algorithms implemented in the DSP 224.

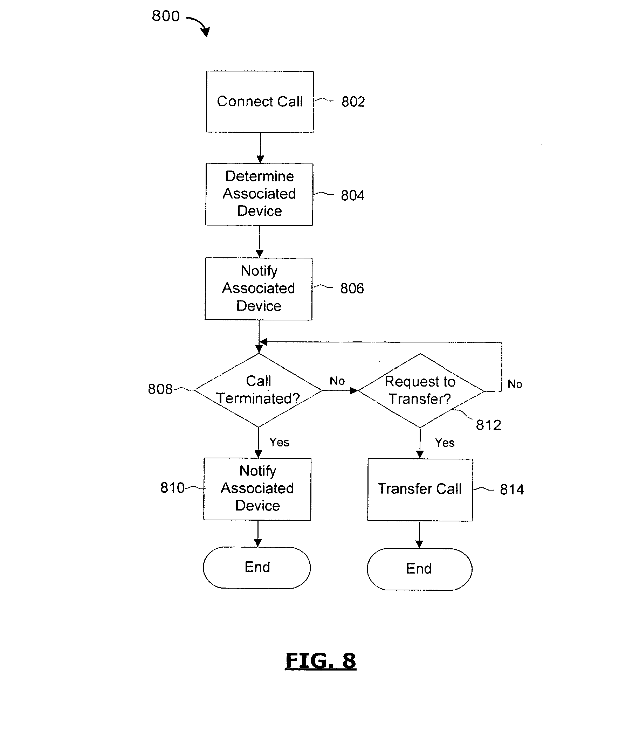

Referring now to Figure 8, a process 800 for transferring a call from a first communication device to a second communication device is shown. In the discussion which follows, the process 800 of Figure 8 will be described with reference to the system 10 of Figure 1 and the enterprise communications platform 14 of Figure 6. It will be appreciated that the process 800 of Figure 8 may be implemented by the enterprise communications platform 14 of Figures 1 and 6. In particular, the processor 104 may be configured to execute at least some of the process 800 of Figure 8. In some embodiments, the process 800 may be implemented, generally, by the notification module 106 and the request processing module 107 of the enterprise communication platform 14.

At step 802, a call between a first device and a third-party device is received and connected using the communications bridge 102. The first device may be any communication device which is connected to the enterprise communications platform 14. Since the received call is routed through the enterprise communications platform 14, the received call is a call which is managed by the enterprise communications platform 14. Accordingly, the enterprise communications platform 14, as manager of the telephone call, may initiate a transfer of that call from the first device. Thus, the call is transferable."

In this embodiment, the receipt of a call at the enterprise communications platform 14 acts as a triggering event which automatically prompts the enterprise communication platform 14 to notify the first device that the call is transferable.

At step 804, the notification module 106 of the enterprise communications platform 14 determines that a second device is associated with the first device and that the second device should be notified that the first device is engaged in a transferable call. This determination may be made, for example, using associated device information such as the associated device list 114 in the memory 110 and/or the rules 130 in the memory 110. That is, the enterprise communications platform 14 may use the first device to determine, from the list 114 of the memory 110, whether any associated devices should be notified when the first device is engaged in a transferable call.

At step 806, if the notification module 106 determines that one or more associated devices should be notified that the first device is engaged in a transferable call, it communicates a notifier to that device. The method of communication of the notifier will vary based on the capabilities of the intended recipient device. For example, if the associated device is a mobile device 11, the notifier may be transmitted wirelessly through a data channel of the PLMN 50 or the WLAN 32.

The notifier may include information describing the call. For example, the notifier may include information identifying the first device, which is the device presently engaged in the call. In some embodiments, the notifier may include information identifying a third-party device, which is engaged in the call with the first device. If the call was initiated by the first device (i.e. the first device is the caller and the third party is the recipient), then the information identifying the third-party may be the phone number or other address/identifier that was called by the first device. If the call was initiated by the third party (i.e. the first device is the recipient and the third party is the caller), then the information identifying the third-party may be obtained from ANI data from the received call. That is, the information identifying the third-party may be based on Caller ID information associated with the received call.

Next, at step 808 and 812, the enterprise communications platform 14 waits until either the call has been terminated (step 808) (at the first device, for example) or a request has been made from an associated second device to transfer the call to the second device (step 812). If the call is terminated prior to a request to transfer the call being received at the communication platform 14, the notification module 106 may transmit a further notifier to any associated devices (step 810). Alternatively, if either the first or associated device requests that the enterprise communications platform 14 transfer the call to the associated device, the call may be transferred at step 814 by the request processing module 107 of the enterprise communications platform 14.

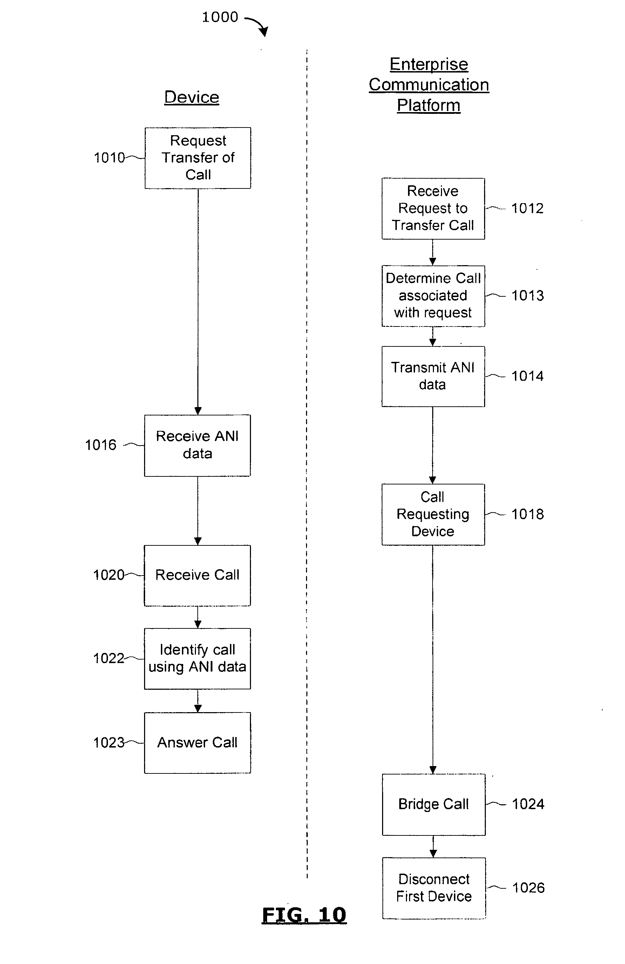

The process of transferring a call will be discussed in greater detail below with reference to Figures 10, 11 and 12.

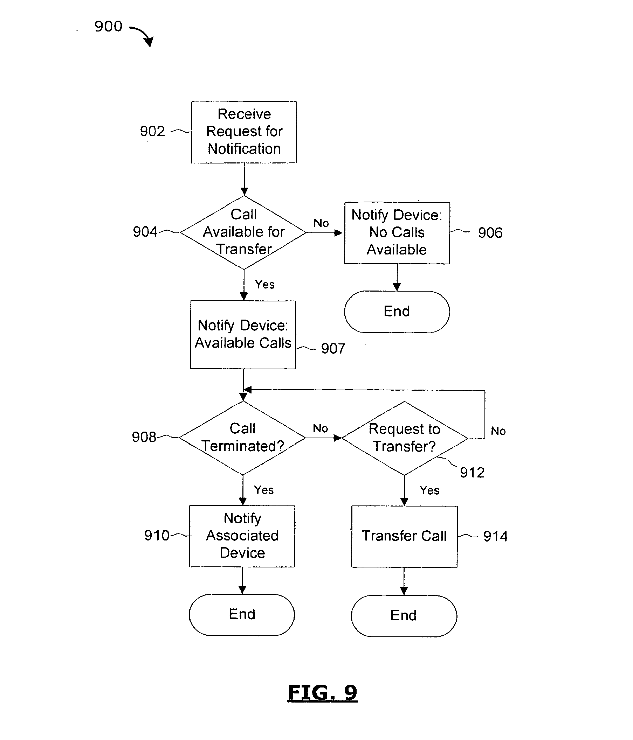

It will be understood that the process 800 of Figure 8 provides an automatic notification system in which devices are automatically notified when calls are available for transfer to those devices. In other embodiments, such as the embodiment illustrated in Figure 9, the process 900 may only notify a device that a call is available to be transferred upon request by that device. That is, the communication device, such as the mobile device 11 of Figure 7, may be configured to transmit a request to be notified whether any calls are available for pulling. In some embodiments, the device 11 may be configured to transmit such a request if a user selects a "Pull Call" or "Transfer Call" option on the mobile device 11. When a user selects such an option, the device will attempt to obtain information specifying the calls which are available for pulling. When such a request is received, the notification module 106 determines whether there are any calls available for pulling and transmits a notifier identifying any such calls.

Accordingly, in the process 900 of Figure 9 the notification module 106 of the enterprise communications platform 14 is configured to transmit a notifier when it receives a request to do so.

The process 900 begins when the notification module 106 receives a request (step 902) from an associated device to notify the associated device whether any calls are available for transfer.

At step 904 the notification module 106 determines whether there are any calls available for transfer. The notification module 106 may determine this with reference to the associated device list 114 of the memory 110. That is, the notification module 106 may determine whether any of the devices associated with the device making the request are engaged in transferable calls. More particularly, the notification module 106 may determine whether any of these devices are engaged in calls which are routed through or otherwise managed by the enterprise communications platform 14.

The notification module 106 may be configured to communicate a notifier to notify the requesting device of any calls which are available for transfer at step 907. The notifier may include any of the details discussed above with reference to Figure 8. If the notification module 106 determines that no calls are available for transfer, the notification module 106 may notify the requesting device that no calls are available for transfer at step 906.

The transferable call update module 275 (Figure 7) of the device receiving the notifier may be configured to display a list of calls which are available for transfer on its display 204 (Figure 7).

Next, at step 908 and 912, the enterprise communications platform 14 waits until either the call has been terminated (step 908) (at the first device, for example) or a request has been made from an associated second device to transfer the call to the second device (step 912). If the call is terminated prior to a request to transfer the call being received at the communication platform 14, the notification module 106 may transmit a further notifier to any associated devices (step 910). Alternatively, if either the first or associated device requests that the enterprise communications platform 14 transfer the call to the associated device, the call may be transferred at step 914 by the request processing module 107 of the enterprise communications platform 14.

The process of transferring a call will be discussed in greater detail below with reference to Figures 10, 11 and 12.

Referring now to Figure 10, a process 1000 for transferring a call from a first device to a second device is described. The process 1000 includes steps or operations performed by the requesting device, which may be a mobile device 11, such as the mobile device 11 shown in Figures 1 and 7, and corresponding steps or operations for execution by the enterprise communication platform 14 shown in Figures 1 and 6. The process 1000 may be referred to as an ANI pooling method. In some embodiments, the call request module 274 of the device 11 (Figure 7) may be configured to perform the device-specific steps or operations of the process 1000. Similarly, the request processing module 107 of the enterprise communication platform 14 (Figure 1) may be configured to perform the server-specific steps or operations of the process 1000.

At step 1010, the call request module 274 of the device 11 making the request communicates a request which is received by the enterprise communication platform 14 at step 1012. The request may include data identifying the call associated with the request. For example, the request may include data specifying the device which is currently engaged in the call. In other embodiments, the request may include data identifying the requesting device itself. The request is typically communicated over a data channel.

At step 1013, the enterprise communication platform 14 identifies the call associated with the request. The call may, in some embodiments, be identified from the information included in the request identifying the call associated with the request. In other embodiments, the call associated with the request may be identified based on the device 11 making the request and the list 114 of associated devices in the memory 110 of the enterprise communication platform 14 (Figure 6). That is, the enterprise communication platform 14 may determine which device associated with the requesting device is currently engaged in a transferable call.

In response to the request, the enterprise communication platform 14 may transmit ANI data at step 1014 to the device 11 over a data channel. The ANI data specifies a telephone line that the enterprise communication platform 14 will use in order to make a call to the device 11. The ANI data is received by the device 11 at step 1016.

At step 1018, the enterprise communication platform 14 uses the telephone line associated with the transmitted ANI data to call the device 11. The call is received at step 1020 by the device 11. The device 11 is able to identify the call as being associated with the request from the ANI data associated with the telephone line from which the call is received. That is, the device 11 compares the ANI data received at step 1016 with the ANI data associated with the received call 1020 to determine whether the received call is associated with the call transfer request transmitted at step 1010.

At step 1023, after the device 11 determines that the call is associated with the request, the call is answered.

At step 1024, the communication bridge 102 of the enterprise communication platform 14 bridges the call. That is, the enterprise communication platform 14 connects the requesting device 11 to the call. The communication bridge 102 then disconnects the device associated with the requesting device from the call at step 1026.

It will be appreciated that the process 1000 of Figure 10 permits the enterprise communication platform 14 to call the device 11 (step 1018) instead of requiring the device 11 to call the enterprise communication platform 14. This may be particularly desirable to users who have wireless plans which have different treatment for incoming and outgoing calls. For example, some users may have wireless plans which allow for unlimited incoming calls but which charge for outbound calls.

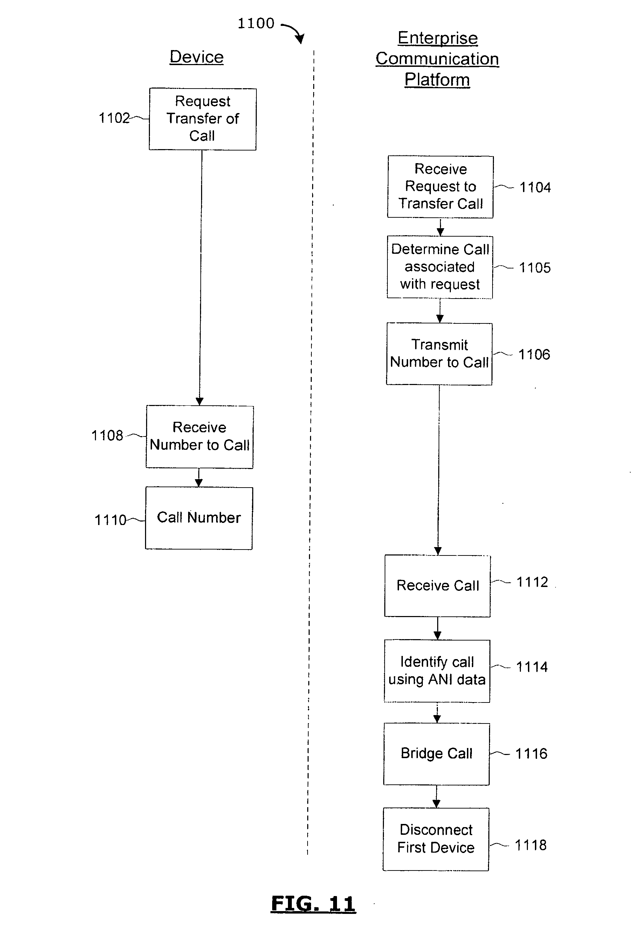

Referring now to Figure 11, an alternative process 1100 for transferring a call from a first device to a second device is described. The process 1100 includes steps or operations performed by the requesting device, which may be a mobile device 11, such as the mobile device 11 shown in Figures 1 and 7, and corresponding steps or operations for execution by the enterprise communication platform 14 shown in Figures 1 and 6. The process 1100 may be referred to as a DNIS pooling method. In some embodiments, the call request module 274 of the device 11 (Figure 7) may be configured to perform the device-specific steps or operations of the process 1100. Similarly, the request processing module 107 of the enterprise communication platform 14 (Figure 1) may be configured to perform the server-specific steps or operations of the process 1100.

In a first step 1102, the device 11 communicates a request to the enterprise communication platform 14, requesting that a call be transferred to the device 11. The request may be communicated over a data channel and received at the enterprise communication platform 14 at step 1104.

As with the method of Figure 10, the request may include data identifying the call associated with the request. For example, the request may include data specifying the device which is currently engaged in the call. In other embodiments, the request may include data identifying the requesting device itself. The request may be transmitted over a data channel.

At step 1105, the enterprise communication platform 14 identifies the call associated with the request. The call may, in some embodiments, be identified from the information included in the request identifying the call associated with the request. In other embodiments, the call associated with the request may be identified based on the device 11 making the request and the list 114 of associated devices in the memory 110 of the enterprise communication platform 14. That is, the enterprise communication platform 14 may determine which device associated with the requesting device is currently engaged in a transferable call.

Next, at step 1106, the enterprise communication platform 14 transmits a number to the device 11, which the device 11 may call in order to transfer the call. The number may be transmitted over a data channel and received at the device at step 1108.

At step 1110, the device 11 calls the number received at step 1108. In some embodiments, the device may perform step 1110 automatically, without any user interaction. That is, immediately upon receiving the call, the device 11 may call the number to initiate the transfer.

At step 1112, the enterprise communication platform 14 receives the call. The call is received over a voice channel and includes ANI data indicating its source. In some embodiments, the enterprise communication platform 14 identifies the source of the call based on the ANI data at step 1114.

At step 1116, the communication bridge of the enterprise communication platform 14 connects the requesting device 11 to the call and disconnects the device previously engaged in the call at step 1118.

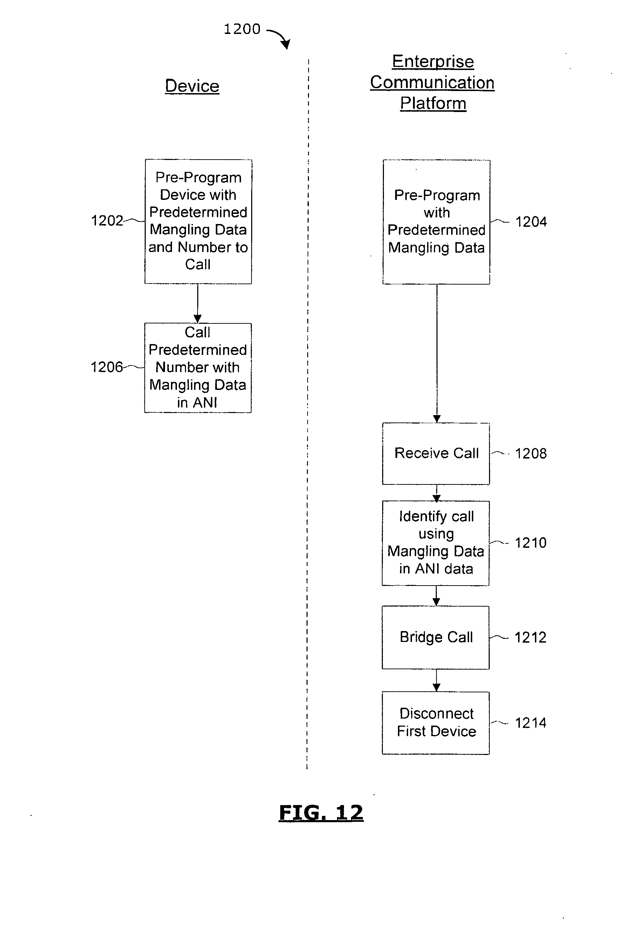

Referring now to Figure 12, an alternative process 1200 for transferring a call from a first device to a second device is described. The process 1200 includes steps or operations performed by the requesting device, which may be a mobile device 11, such as the mobile device 11 shown in Figures 1 and 7, and corresponding steps or operations for execution by the enterprise communication platform 14 shown in Figures 1 and 6. The process 1200 may be referred to as an ANI mangling method.

In some embodiments, the call request module 274 of the device 11 (Figure 7) may be configured to perform the device-specific steps or operations of the process 1200. Similarly, the request processing module 107 of the enterprise communication platform 14 (Figure 1) may be configured to perform the server-specific steps or operations of the process 1200.

In contrast to the methods of Figures 10 and 11, the method of Figure 12 does not rely on the use of a data channel to set up the transfer of the call. In the method of Figure 12, both the requesting device 11 and the enterprise communication platform 14 are pre-programmed with mangling data (Steps 1202 and 1204 respectively). The mangling data is a unique identifier associated with a device. The mangling data may be stored in the memory 110 of the enterprise communication platform and the memory 210 of the device 11. The mangling data may have been generated by either the device 11 or the enterprise communication platform 14. The mangling data may be shared between the device 11 and the enterprise communication platform 14 at a time when a data channel is available. For example, in some embodiments it may be shared at the time the device 11 is activated.

To initiate the transfer of a call, the device 11 appends the mangling data to ANI data associated with the call and places a call to a predetermined number with the mangling data included in the ANI data (Step 1206). This voice call acts as a request to transfer the call.

The voice call is received at the enterprise communication system 14 at step 1208. At step 1210 the enterprise communication platform 14 identifies the call associated with the request based on the mangling data. That is, the enterprise communication platform 14 identifies the device making the request from the mangling data and determines the call associated with the request from the list 114 of associated devices in the memory 110 of the enterprise communication platform. That is, the enterprise communication platform 14 may determine which device associated with the requesting device is currently engaged in a transferable call.

At step 1212 the communication bridge of the enterprise communication platform 14 connects the requesting device 11 to the call and disconnects the device previously engaged in the call at step 1214.

While the processes 800, 900, 1000, 1100, 1200, have been described as occurring in a particular order, it will be appreciated by persons skilled in the art that some of the steps may be performed in a different order provided that the result of the changed order of any given step will not prevent or impair the occurrence of subsequent steps. Furthermore, some of the steps described above may be combined in other embodiments, and some of the steps described above may be separated into a number of sub-steps in other embodiments.

Furthermore, it will be appreciated that, while the embodiments discussed above have generally referred to embodiments in which the device making a request to transfer a call is the same device to which the call is transferred (i.e. the call is pulled), in other embodiments, the device making the request to transfer the call may be different than the device to which the call is transferred (i.e. the call is pushed to another device). Referring again to Figure 9, a user may be engaged in a telephone call on a first device. The user may prefer that the call be transferred from the first device to a third device. In some embodiments, the user may make a request to transfer the call from the first device to the third device using a second device. By way of example and not limitation, the user may be engaged in a telephone call on a desktop phone (the first device) and may decide that they would prefer to transfer the call to a boardroom phone (the third device). To initiate the transfer of the call, the user may submit a request to transfer the call using a mobile device (the second device). In this alternative embodiment, at step 914 of Figure 9, the request to transfer the call, which is transmitted by the second device, may include an identifier indicating the device that the call is to be transferred to. By way of example, the request may include a telephone number associated with the device to which the call is to be transferred. Then, at step 914, the call is transferred to the device specified.

While the present disclosure is described, at least in part, in terms of methods, a person of ordinary skill in the art will understand that the present disclosure is also directed to the various components for performing at least some of the aspects and features of the described methods, be it by way of hardware components, software or any combination of the two, or in any other manner. Moreover, the present disclosure is also directed to a prerecorded storage device or other similar computer readable medium including program instructions recorded thereon for performing the methods described herein. For example, the present disclosure is also directed at a computer readable medium having encoded thereon instructions for executing any one or a combination of the processes 800, 900, 1000, 1100, 1200, of Figures 8 to 12.

Certain adaptations and modifications of the described embodiments can be made. Therefore, the above discussed embodiments are considered to be illustrative and not restrictive.

## Claims

1. A method of transferring a call from a first device to a second device (11), the method comprising:
transmitting a notification from a call management server (14) to the second device (11) to indicate that the first device is engaged in a call that is transferable;
receiving, at the call management server (14), a transfer request from the second device to transfer the call from the first device to the second device; and
in response to the receipt of the transfer request
connecting the second device (11) to the call, and
disconnecting the first device from the call.

2. The method of claim 1, further comprising:
determining, from a memory (110), whether the first device is associated with the second device (11),
and wherein the notification is only transmitted if it is determined that the first device is associated with the second device (11).

3. The method of any one of claims 1 or 2 wherein a transferable call is a call that is managed by the server (14).

4. The method of any one of claims 1 to 3 further comprising, prior to transmitting a notification, receiving a request from the second device (14) for information regarding transferable calls.

5. The method of any one of claims 1 to 3, further comprising, prior to notifying:
receiving a call;
connecting the first device to the call; and
determining that the first device is associated with the second device (11),
and wherein the notification is automatically transmitted in response to receiving the call.

6. The method of any one of claims 1 to 5, wherein the notification comprises call identification information, describing the call.

7. The method of claim 6, wherein the call identification information includes information describing the first device.

8. The method of claim 6, wherein the call identification information includes information identifying a third device engaged in the call with the first device.

9. The method of any one of claims 1 to 8, further comprising, prior to connecting the second device to the call:
transmitting a number to the second device (11), the number specifying a telephone number that the second device (11) may call to transfer the call; and
receiving a call from the second device (11) at the transmitted number.

10. The method of claim 9, further comprising, after receiving the call:
identifying the call as originating from the second device (11) using ANI information associated with the call.

11. The method of any one of claims 1 to 8, further comprising, prior to connecting the call:
calling the first device from the call management server (14).

12. The method of claim 11, further comprising, prior to calling the first device:
transmitting ANI data to the second device (11), the ANI data identifying a telephone line,
and wherein the call to the first device is made using the telephone line associated with the ANI data.

13. The method of any one of claims 1 to 8, wherein receiving a request comprises:
receiving a call from the second device (11), the call having ANI data associated therewith, the ANI data including a mangling identifier; and
comparing the received mangling identifier with a stored mangling identifier to determine that the second device (11) is associated with the call.

14. A call management server comprising:
a communication bridge (102) for connecting calls;
at least one controller (104) for controlling the operation of the server, the controller (104) being configured to perform the method of any one of claims 1 to 13.

15. A computer program product comprising a computer readable storage medium having encoded thereon computer instructions for transferring a call from a first device to a second device, the computer executable instructions comprising:
computer executable instructions for performing the method of any one of claims 1 to 13.

## Patentansprüche

1. Verfahren zum Umlegen bzw. Transferieren eines Anrufs von einer ersten Vorrichtung auf eine zweite Vorrichtung (11), wobei das Verfahren Folgendes aufweist:
Übermitteln einer Mitteilung von einem Anrufverwaltungsserver (14) an die zweite Vorrichtung (11), um anzuzeigen, dass die erste Vorrichtung an einem Anruf beteiligt ist, der umlegbar bzw. transferierbar ist,
Empfangen an einem Anrufverwaltungsserver (14) einer Umlege- bzw. Transferanfrage von der zweiten Vorrichtung, um den Anruf von der ersten Vorrichtung auf die zweite Vorrichtung umzulegen bzw. zu transferieren, und
als Reaktion auf den Empfang der Umlege- bzw. Transferanfrage
Verbinden der zweiten Vorrichtung (11) mit dem Anruf und
Trennen der ersten Vorrichtung vom Anruf.

2. Verfahren nach Anspruch 1, das ferner Folgendes aufweist:
Bestimmen aus einem Speicher (110), ob die erste Vorrichtung mit der zweiten Vorrichtung (11) verknüpft ist,
wobei die Mitteilung nur übermittelt wird, wenn bestimmt wird, dass die erste Vorrichtung mit der zweiten Vorrichtung (11) verknüpft ist.

3. Verfahren nach Anspruch 1 oder 2, wobei ein umlegbarer bzw. transferierbarer Anruf ein Anruf ist, der vom Server (14) verwaltet wird.

4. Verfahren nach einem der Ansprüche 1 bis 3, das vor dem Übermitteln einer Mitteilung ferner Empfangen einer Anfrage von der zweiten Vorrichtung (14) nach Information bezüglich umlegbare bzw. transferierbare Anrufe aufweist.

5. Verfahren nach einem der Ansprüche 1 bis 3, das vor dem Mitteilen ferner Folgendes aufweist:
Empfangen eines Anrufs,
Verbinden der ersten Vorrichtung mit dem Anruf und
Bestimmen, dass die erste Vorrichtung mit der zweiten Vorrichtung (11) verknüpft ist,
wobei die Mitteilung automatisch als Reaktion auf das Empfangen des Anrufs übermittelt wird.

6. Verfahren nach einem der Ansprüche 1 bis 5, wobei die Mitteilung Anrufidentifizierungsinformation aufweist, die den Anruf beschreibt.

7. Verfahren nach Anspruch 6, wobei die Anrufidentifizierungsinformation Information enthält, welche die erste Vorrichtung beschreibt.

8. Verfahren nach Anspruch 6. wobei die Anrufidentifizierungsinformation Information enthält, die eine dritte Vorrichtung identifiziert, die am Anruf mit der ersten Vorrichtung beteiligt ist.

9. Verfahren nach einem der Ansprüche 1 bis 8, das vor dem Verbinden der zweiten Vorrichtung mit dem Anruf ferner Folgendes aufweist:
Übermitteln einer Nummer an die zweite Vorrichtung (11), wobei die Nummer eine Telefonnummer angibt, auf welcher die zweite Vorrichtung (11) anrufen kann, um den Anruf umzulegen bzw. zu transferieren, und
Empfangen eines Anrufs von der zweiten Vorrichtung (11) an der übertragenen Nummer.

10. Verfahren nach Anspruch 9, das nach Empfangen des Anrufs ferner Folgendes aufweist:
Identifizieren des Anrufs als von der zweiten Vorrichtung (11) stammend unter Verwendung von ANI-Information, die mit dem Anruf verknüpft ist.

11. Verfahren nach einem der Ansprüche 1 bis 8, das vor dem Verbinden des Anrufs ferner Folgendes aufweist:
Anrufen der ersten Vorrichtung vom Anrufverwaltungsserver (14) aus.

12. Verfahren nach Anspruch 11, das vor dem Anrufen der ersten Vorrichtung ferner Folgendes aufweist:
Übermitteln von ANI-Daten an die zweite Vorrichtung (11), wobei die ANI-Daten eine Telefonleitung identifizieren,
wobei der Anruf zur ersten Vorrichtung unter Verwendung der Telefonleitung getätigt wird, die mit den ANI-Daten verknüpft ist.

13. Verfahren nach einem der Ansprüche 1 bis 8, wobei das Empfangen einer Anfrage Folgendes aufweist:
Empfangen eines Anrufs von der zweiten Vorrichtung (11), wobei der Anruf damit verknüpfte ANI-Daten aufweist, wobei die ANI-Daten einen Mangelidentifizierer aufweisen, und
Vergleichen des empfangenen Mangelidentifizierers mit einem gespeicherten Mangelidentifizierer, um zu bestimmen, dass die zweite Vorrichtung (11) mit dem Anruf verknüpft ist.

14. Anrufverwaltungsserver mit
einer Kommunikationsbrücke (102) zum Verbinden von Anrufen,
mindestens einer Steuereinheit (104) zum Steuern des Betriebs des Servers, wobei die Steuereinheit (104) konfiguriert ist, das Verfahren nach einem der Ansprüche 1 bis 13 durchzuführen.

15. Computerprogrammprodukt mit einem computerlesbaren Speichermedium mit darauf gespeicherten Computerbefehlen zum Umlegen bzw. Transferieren eines Anrufs von einer ersten Vorrichtung auf eine zweite Vorrichtung, wobei die von einem Computer ausführbaren Befehle Folgendes aufweisen:
computerausführbare Befehle zum Durchführen des Verfahrens nach einem der Ansprüche 1 bis 13.

## Revendications

1. Procédé pour transférer un appel d'un premier dispositif vers un deuxième dispositif (11), le procédé comprenant le fait :
d'émettre une notification à partir d'un serveur de gestion d'appels (14) en direction du deuxième dispositif (11) pour indiquer que le premier dispositif est engagé dans un appel transférable ;
de recevoir, au niveau du serveur de gestion d'appels (14), une demande de transfert en provenance du deuxième dispositif pour transférer l'appel du premier dispositif au deuxième dispositif ; et
en réponse à la réception de la demande de transfert
de connecter le deuxième dispositif (11) à l'appel, et
de déconnecter le premier dispositif de l'appel.

2. Procédé de la revendication 1, comprenant en outre le fait :
de déterminer, à partir d'une mémoire (110), si le premier dispositif est associé au deuxième dispositif (11) ou non,
et dans lequel la notification n'est émise que si on détermine que le premier dispositif est associé au deuxième dispositif (11).

3. Procédé de l'une quelconque des revendications 1 ou 2 dans lequel un appel transférable est un appel qui est géré par le serveur (14).

4. Procédé de l'une quelconque des revendications 1 à 3 comprenant en outre, avant d'émettre une notification, le fait de recevoir une demande provenant du deuxième dispositif (14) pour des informations concernant les appels transférables.

5. Procédé de l'une quelconque des revendications 1 à 3, comprenant en outre, avant de notifier, le fait :
de recevoir un appel ;
de connecter le premier dispositif à l'appel ; et
de déterminer que le premier dispositif est associé au deuxième dispositif (11),
et dans lequel la notification est automatiquement émise en réponse à la réception de l'appel.

6. Procédé de l'une quelconque des revendications 1 à 5, dans lequel la notification comprend une information d'identification d'appel, décrivant l'appel.

7. Procédé de la revendication 6, dans lequel l'information d'identification d'appel comporte une information décrivant le premier dispositif.

8. Procédé de la revendication 6, dans lequel l'information d'identification d'appel comporte une information identifiant un troisième dispositif engagé dans l'appel avec le premier dispositif.

9. Procédé de l'une quelconque des revendications 1 à 8, comprenant en outre, avant de connecter le deuxième dispositif à l'appel, le fait :
d'émettre un numéro au deuxième dispositif (11), le numéro spécifiant un numéro de téléphone que le deuxième dispositif (11) peut appeler pour transférer l'appel ; et
de recevoir un appel à partir du deuxième dispositif (11) au numéro émis.

10. Procédé de la revendication 9, comprenant en outre, après la réception de l'appel, le fait :
d'identifier l'appel comme prenant origine au deuxième dispositif (11) en utilisant une information d'enregistrement automatique des numéros, dite information ANI, associée à l'appel.

11. Procédé de l'une quelconque des revendications 1 à 8, comprenant en outre, avant de connecter l'appel, le fait :
d'appeler le premier dispositif à partir du serveur de gestion d'appels (14).

12. Procédé de la revendication 11, comprenant en outre, avant d'appeler le premier dispositif, le fait :
d'émettre des données ANI au deuxième dispositif (11), les données ANI identifiant une ligne téléphonique,
et dans lequel l'appel au premier dispositif est fait en utilisant la ligne téléphonique associée aux données ANI.

13. Procédé de l'une quelconque des revendications 1 à 8, dans lequel la réception d'une demande comprend le fait :
de recevoir un appel à partir du deuxième dispositif (11), l'appel ayant des données ANI qui lui sont associées, les données ANI comportant un identifiant de décoration ; et
de comparer l'identifiant de décoration reçu à l'identifiant de décoration stocké pour déterminer que le deuxième dispositif (11) est associé à l'appel.

14. Serveur de gestion d'appels comprenant :
un pont de communication (102) pour connecter les appels ;
au moins une unité de commande (104) pour commander le fonctionnement du serveur, l'unité de commande (104) étant configurée pour réaliser le procédé de l'une quelconque des revendications 1 à 13.

15. Produit de programme informatique comprenant un support de stockage lisible par ordinateur sur lequel sont codées des instructions informatiques pour transférer un appel d'un premier dispositif à un deuxième dispositif, les instructions exécutables par ordinateur comprenant :
des instructions exécutables par ordinateur pour mettre en oeuvre le procédé de l'une quelconque des revendications 1 à 13.
